(19) Europäisches Patentamt / European Patent Office / Office européen des brevets

(11) **EP 1 953 427 B1**

(12) **EUROPEAN PATENT SPECIFICATION**

(45) Date of publication and mention
of the grant of the patent:
**21.12.2011  Bulletin 2011/51**

(51) Int Cl.:
*F16H 61/662* $^{(2006.01)}$   *H02H 7/085* $^{(2006.01)}$

(21) Application number: **08250188.3**

(22) Date of filing: **15.01.2008**

(54) **Control apparatus for transmission mechanism**

Steuervorrichtung für einen Übertragungsmechanismus

Appareil de commande pour mécanisme de transmission

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **31.01.2007  JP 2007022217
25.10.2007  JP 2007277115**

(43) Date of publication of application:
**06.08.2008   Bulletin 2008/32**

(73) Proprietor: **Yamaha Hatsudoki Kabushiki Kaisha
Shizuoka-ken 438-8501 (JP)**

(72) Inventor: **Ishioka, Kazutoshi
c/o Yamaha Hatsudoki Kabushiki Kaisha
Iwata-shi,
Shizuoka-ken 438-8501 (JP)**

(74) Representative: **Lamb, Martin John Carstairs
Marks & Clerk LLP
90 Long Acre
London
WC2E 9RA (GB)**

(56) References cited:
**EP-A- 1 614 939     JP-A- 9 250 631**

**Description**

FIELD OF THE INVENTION

This invention relates to: a control apparatus for a transmission mechanism, a transmission, a vehicle provided with the transmission, a method of controlling the transmission mechanism, and a method of estimating the heat value of an electric motor. In particular, this invention relates to a control apparatus for an electronically controlled transmission mechanism with its transmission ratio made variable with an electric motor, an electronically controlled transmission with its transmission ratio made variable with an electric motor, a vehicle provided with such a transmission, a method of controlling the electronically controlled transmission mechanism with its transmission ratio made variable with the electric motor, and a method of estimating the heat value of the electric motor in the electronically controlled transmission mechanism with its transmission ratio made variable with the electric motor.

BACKGROUND TO THE INVENTION

A continuously variable transmission is conventionally known with which the transmission ratio may be changed continuously using an electric motor (hereinafter referred to as ECVT, in full: electronically, continuously variable transmission). An ECVT is disclosed in, for example, JP-A-2004-19740.

In a typical ECVT, the electric motor is driven in reverse relatively often due to changes in transmission ratio. As a result, a relatively large amount of heat is generated by the electric motor, leading to temperature rise in the electric motor and its driving circuit, and to the possibility of deterioration in the motor performance.

Therefore, it is preferable to monitor the motor temperature or the heat value so that the motor temperature does not exceed a permissible use temperature range. For example, a method of estimating the motor temperature is conceivable in which temperature sensors are provided on the motor, its driving circuit etc. Because the heat value of the motor is in proportion to the square of the current flowing through the motor, another conceivable method of estimating the heat value of the motor is to provide a current sensor to measure the current flowing through the motor, and estimate the heat value of the motor from the measured current.

The methods mentioned above, however, require separate temperature sensor and current sensor to be provided. As a result, constitution and control of the ECVT become undesirably complicated.

This invention has been made in view of the above points. Therefore, an object of the invention is to provide a transmission that makes it possible to estimate the heat value of the electric motor with a simple constitution.

Incidentally, while the problems to be solved are explained here using the ECVT as an example, the problems to be solved are also true of transmissions in general that change transmission ratio using an electric motor.

EP 1 614 939 A discloses the features of the preamble of claims 1, 12, and 14.

SUMMARY OF THE INVENTION

The control apparatus of to the invention is a control apparatus of a continuously variable transmission mechanism made up of an input shaft, an output shaft, and an electric motor for changing continuously the transmission ratio between the input shaft and output shaft. The control apparatus of the invention estimates the heat value of the electric motor based on the rate of change in the transmission ratio.

The continuously variable transmission of the invention is made up of a continuously variable transmission mechanism, and a control section. The continuously variable transmission mechanism includes an input shaft, an output shaft, and an electric motor. The electric motor changes the transmission ratio continuously between the input shaft and the output shaft. The control section estimates the heat value of the electric motor on the basis of the rate of change in the transmission ratio.

The vehicle of the invention includes the continuously variable transmission of the invention.

The control method of the invention is a method of controlling the continuously variable transmission mechanism made up of an input shaft, an output shaft, and an electric motor for changing continuously transmission ratio between the input shaft and output shaft. With the controlling method of the invention, the heat value of the electric motor is estimated from the rate of change in the transmission ratio.

The method of estimating the heat value of the electric motor of the invention is a method of estimating the heat value of the electric motor in a continuously variable transmission made up of an input shaft, an output shaft, and an electric motor for changing continuously the transmission ratio between the input shaft and output shaft. According to the method of estimating the heat value of the electric motor of the invention, the heat value of the electric motor is estimated from the rate of change in the transmission ratio.

Aspects of the present invention are set forth in the independent claims.

Preferred features of the present invention are set forth in the dependent claims.

The present invention makes it possible to bring about a transmission in which the heat value of the electric motor is estimated with a simple constitution.

BRIEF DESCRIPTION OF THE DRAWINGS

These and other aspects of the present invention will now be described, by way of example only, with reference to the accompanying drawings, in which:

Fig. 1 is a side view of a motorcycle to which the invention is applied;
Fig. 2 is a sectional view of an engine unit;
Fig. 3 is a partial sectional view, showing the constitution of an ECVT;
Fig. 4 is a block diagram, representing a control system of the motorcycle;
Fig. 5 is a block diagram, representing sheave position control;
Fig. 6 is a graph of the function r = f(1) as an example;
Fig. 7 is a graph of the function r = f(1) as another example;
Fig. 8 is a graph of the function r = f(1) as still another example; and
Fig. 9 is a flowchart illustrating the method of estimating the heat value of the electric motor and the method of controlling the electric motor.

DETAILED DESCRIPTION OF THE DRAWINGS

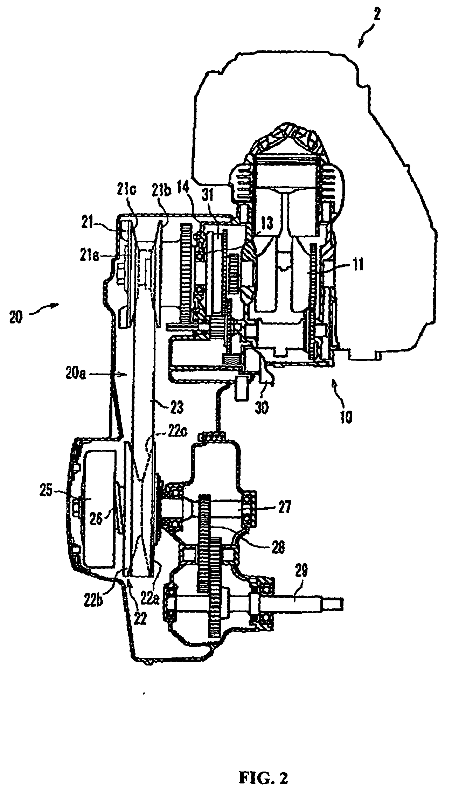

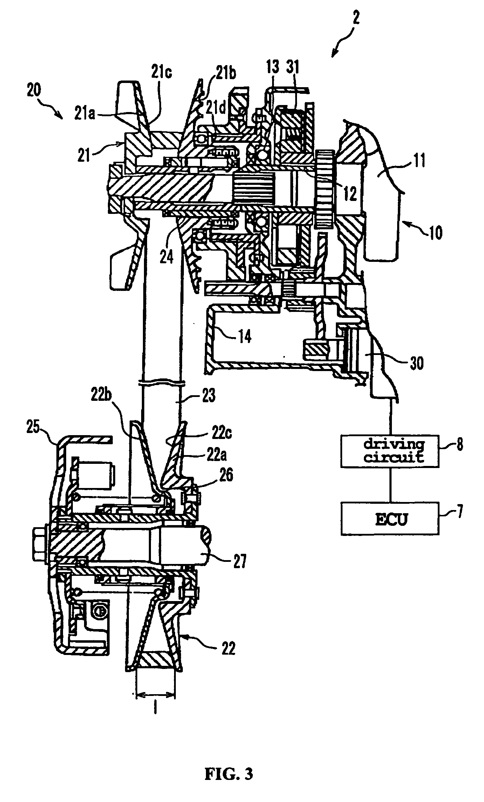

The inventor as a result of eager study found a correlation between the heat value of the electric motor and the rate of change in the transmission ratio and came to fabricate this embodiment.
An example of a preferable embodiment of the invention is described in detail below using a motorcycle 1 as an example. While this embodiment is described using the so-called scooter type of motorcycle 1 as an example, the vehicle of the invention is not limited to the scooter type of motorcycle. The vehicle of the invention may be other than the scooter type of motorcycle. Specifically, the two-wheeled vehicle of the invention may be an off-road type, motorcycle type, scooter type, or a so-called moped type. Further, the vehicle of the invention may be straddle type of vehicle other than the motorcycle. Specifically, the vehicle related to the invention may be, for example, an ATV (all-terrain vehicle). Furthermore, the vehicle of the invention may be other than the straddle type of vehicle such as a four-wheeled vehicle.

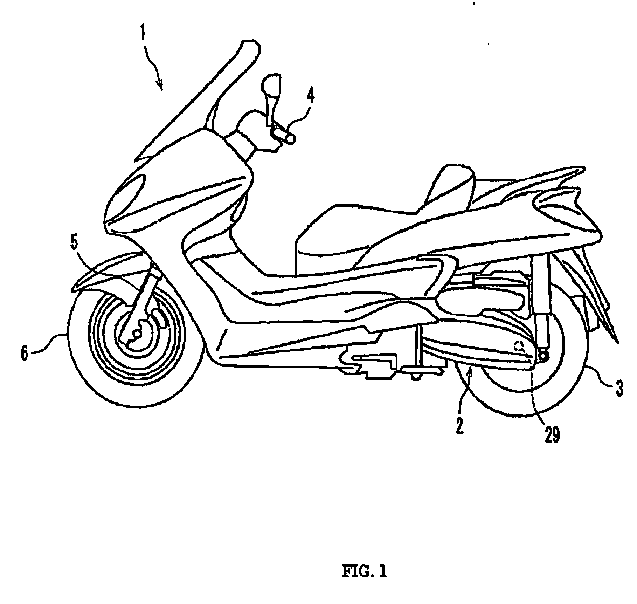

Fig. 1 is a side view of the motorcycle 1. The motorcycle 1 is provided with a vehicle body frame (not shown). An engine unit 2 is mounted on the vehicle body frame. A rear wheel 3 is attached to the rear part of the engine unit 2. In this embodiment, the rear wheel 3 is the driving wheel driven with the engine unit 2.
The vehicle body frame has a head pipe (not shown) extending downward from handlebars 4. A front fork 5 is connected to the lower end part of the head pipe. A front wheel 6 is attached for rotation to the lower end part of the front fork 5. The front wheel 6 is not connected to the engine unit 2 and is a wheel for free rotation.
The constitution of the engine unit 2 will now be described with reference to Figs. 2 and 3.
As shown in Figs. 2 and 3, the engine unit 2 includes an (internal combustion) engine 10 and a transmission 20. In this embodiment, the engine 10 is described as a forced air-cooled, four-stroke cycle engine. However, the engine 10 may be of other types. For example, the engine 10 may be of a water-cooled type. Also the engine 10 may be of a two-stroke cycle type.
As shown in Fig. 3, the engine 10 has a crankshaft 11. A sleeve 12 is brought in spline engagement with the outer circumference of the crankshaft 11. The sleeve 12 is supported for rotation by a housing 14 through a bearing 13. A one-way clutch 31 connected to an electric motor 30 is attached around the sleeve 12.
The transmission 20 is made up of a transmission mechanism 20a, and an ECU 7 as a control section for controlling the transmission mechanism 20a. In this embodiment, the transmission mechanism 20a is described as a belt type of ECVT as an example. The belt of ECVT may be a resin belt, a metal belt, or any other suitable belt. Further, the transmission mechanism 20a is not limited to the belt type of ECVT. The transmission mechanism 20a may be for example a toroidal type of ECVT. Further, the transmission mechanism 20a may be of other than ECVT, of electronically controlled type.
The transmission mechanism 20a has a primary sheave 21, a secondary sheave 22, and a V belt 23. The V belt 23 is run around the primary sheave 21 and the secondary sheave 22. The V belt has a generally V-shape cross section.
The primary sheave 21 rotates integrally with the crankshaft 11. The primary sheave 21 consists of a stationary sheave half 21a and a movable sheave half 21b. The stationary sheave half 21a is secured to one end of the crankshaft 11. The movable sheave half 21b is disposed to oppose the stationary sheave half 21a. The movable sheave half 21b is movable in the axial direction of the crankshaft 11. Opposing surfaces of the stationary sheave half 21a and the movable sheave half 21b form a belt groove 21c in which the V belt 23 runs. The belt groove 21c becomes wider toward radially outer side of the primary sheave 21.

As shown in Fig. 3, the movable sheave half 21b is provided with a cylindrical boss part 21d through which the crankshaft 11 passes. A cylindrical slider 24 is secured to the inside of the boss part 21d. The slider 24 and the movable sheave half 21b form an integral body to be movable in the axial direction of the crankshaft 11. Therefore, the groove width of the belt groove 21c is variable.

The groove width of the belt groove 21c of the primary sheave 21 is varied as the movable sheave half 21b is driven in the axial direction of the crankshaft 11 by the electric motor 30. In this embodiment, the electric motor 30 is assumed to be driven by PWM (pulse width modulation). However, the driving type of the electric motor 30 is not restrictive. The motor 30 may be a stepper motor.

The secondary sheave 22 is arranged behind the primary sheave 21. The secondary sheave 22 is attached through a centrifugal clutch 25 to a driven shaft 27. In detail, the secondary sheave 22 is made up of a stationary sheave half 22a and a movable sheave half 22b. The movable sheave half 22b opposes the stationary sheave half 22a. The movable sheave half 22b is movable in the axial direction of the driven shaft 27. Opposing surfaces of the stationary sheave half 22a and the movable sheave half 22b form a belt groove 22c in which the V belt 23 runs. The belt groove 22c becomes wider toward a radially outer side of the secondary sheave 22.

The movable sheave half 22b is biased by a spring 26 in the direction for decreasing the groove width of the belt groove 22c. Therefore, as the electric motor 30 is driven, and the groove width of the belt groove 21c of the primary sheave 21 decreases, the curve radius of the V belt 23 on the primary sheave 21 increases, and the V belt 23 on the secondary sheave 22 side is drawn radially inward. As a result, the movable sheave half 22b moves against the force of the spring 26 in the direction for widening the belt groove 22c. As a result, the curve radius of the V belt 23 running on the secondary sheave 22 decreases, so that the transmission ratio of the transmission mechanism 20a varies.

The centrifugal clutch 25 is engaged or disengaged according to the revolution of the stationary sheave half 22a. That is, when the revolution of the stationary sheave half 22a is below a specified value, the centrifugal clutch 25 is disengaged. Therefore, the rotation of the stationary sheave half 22a is not transmitted to the driven shaft 27. On the other hand, when revolution of the stationary sheave half 22a reaches or exceeds a specified value, the centrifugal clutch 25 is engaged, so that the rotation of the stationary sheave half 22a is transmitted to the driven shaft 27.

The driven shaft 27 is connected to a speed reduction mechanism 28. The driven shaft 27 is connected though the speed reduction mechanism 28 to a wheel shaft 29. To the wheel shaft 29 is attached the rear wheel 3. Thus, as the driven shaft 27 rotates, the rear wheel 3 rotates together with the wheel shaft 29.

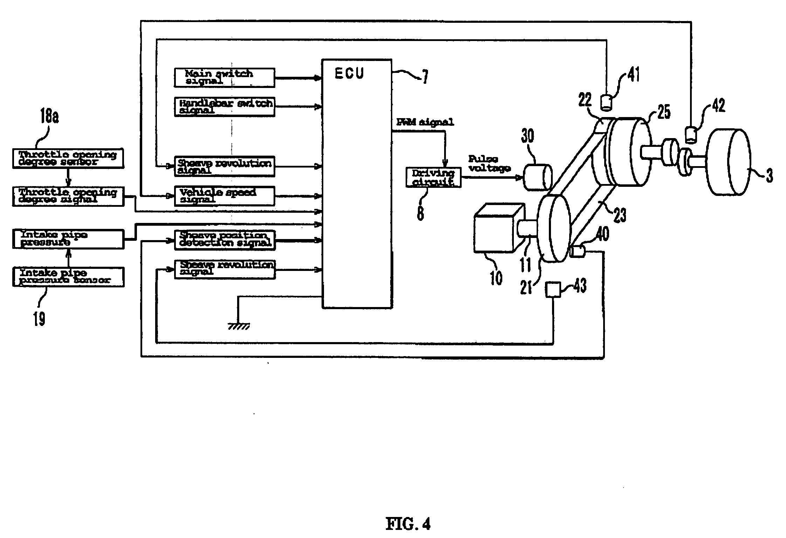

Details of the control system for the motorcycle 1 will now be described with reference to Fig. 4.

As shown in Fig. 4, the ECU 7 is connected to a sheave position sensor 40. The sheave position sensor 40 detects the position of the movable sheave half 21b of the primary sheave 21 relative to the stationary sheave half 21a thereof. In other words, it detects the distance (1) between the stationary sheave half 21a and the movable sheave half 21b in the axial direction of the crankshaft 11. The sheave position sensor 40 outputs the detected distance (1) as a detected sheave position signal to the ECU 7. Here, the sheave position sensor 40 may be constituted for example with a potentiometer or the like.

The ECU 7 is also connected to a primary sheave revolution sensor 43, a secondary sheave revolution sensor 41, and a vehicle speed sensor 42. The primary sheave revolution sensor 43 detects the revolution of the primary sheave 21 and outputs a sheave revolution signal to the ECU 7. The secondary sheave revolution sensor 41 detects the revolution of the secondary sheave 22 and outputs a sheave revolution signal to the ECU 7. The vehicle speed sensor 42 detects the revolution of the rear wheel 3 and outputs a vehicle speed signal according to the detected revolution to the ECU 7.

The ECU 7 is connected to a handlebar switch attached to the steering handlebars 4. The handlebar switch, when operated by a rider, outputs a handlebar switch signal.

A throttle opening degree sensor 18a outputs a throttle opening degree signal to the ECU 7.

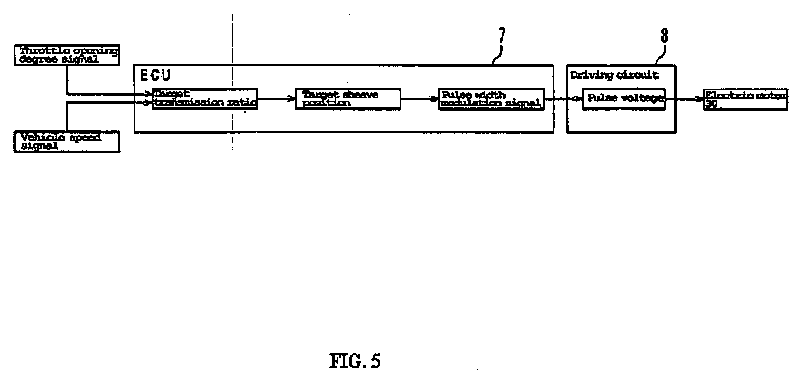

The ECU 7 performs feedback control of the sheave position of the movable sheave half 21b of the primary sheave 21 according to the vehicle speed signal, etc. In other words, the ECU 7 performs feedback control of the distance (1) according to the vehicle speed signal, etc. Specifically, as shown in Fig. 5, a target transmission ratio is determined in the ECU 7 from the throttle opening degree and the vehicle speed. The ECU 7 calculates from the determined target transmission ratio the sheave target position. In other words, the ECU 7 calculates from the determined target transmission ratio the target distance 1 between the movable sheave half 21b and the stationary sheave half 21a. In order to move the movable sheave half 21b to the sheave target position, the ECU 7 outputs a pulse width modulation signal (PWM signal) corresponding to the present position of the movable sheave half 21b and the sheave target position to a driving circuit 8 shown in Fig. 4. The driving circuit 8 applies an impulse voltage corresponding to the PWM signal to the electric motor 30. As a result, the movable sheave half 21b is driven to adjust the transmission ratio.

The method of estimating the heat value of the electric motor 30 will now be described. First, before describing a method of estimating the heat value of the electric motor 30 in detail, the principle of the method is described.

The inventor, as a result of eager study, found a correlation between the heat value of the electric motor 30 and the rate of change in the transmission ratio of the transmission mechanism 20a. Specifically, the inventor came to the idea of correlation between the heat amount and the rate of change in the transmission ratio of the transmission mechanism 20a as a result of the findings enumerated below:

1) The heat value of the electric motor 30 is in linear correlation to the square of part of effective voltage applied to the electric motor 30 that contributes to the heat generation by the electric motor 30.

2) The amount of voltage contributing to the heat generation by the electric motor 30 is determined by subtracting the induced voltage for moving the movable sheave half 21b from the effective voltage applied to the electric motor 30.

3) The induced voltage for moving the movable sheave half 21b is in linear correlation to the rate of change in the transmission ratio of the transmission mechanism 20a.

From the above findings by the inventor, the heat value of the electric motor 30 may be estimated using the equation (1) below:

$$\int \beta \{V_A - \alpha \cdot (dr/dt)\}^2 \cdot dt \quad . \quad . \quad . \quad . \quad (1)$$

where
$\beta$ : a constant.
$V_A$: effective voltage applied to the electric motor 30. dr/dt: rate of change in the transmission ratio of the transmission mechanism 20a.
$\alpha$ : a constant, or a factor expressed with the following equation (3a) or (3b):

$$\alpha = [d\{f(l)\}/dl]^{-1} \quad . \quad . \quad . \quad . \quad (3a)$$

$$\alpha = [d\{g(r)\}/dr] \quad . \quad . \quad . \quad . \quad (3b)$$

where
f(1): a function of distance 1 representing the transmission ratio.
r: transmission ratio.
g(r): a function of transmission ratio r, or an inverse function of the above function f(1).

In this embodiment, the above equations (3a) and (3b) are equal to each other.

In this embodiment, because the electric motor 30 is controlled as described above by pulse width modulation, $V_A$ in the above equation (1) is expressed with the equation (2) below:

$$V_A = V_p \cdot (DUTY) \quad . \quad . \quad . \quad . \quad (2)$$

where
$V_p$: magnitude of pulse voltage applied to the electric motor 30.
DUTY: duty ratio of pulse voltage applied to the electric motor 30.

Therefore, the equation (1) may be transformed from the equation (2) into the following equation (4):

$$\int \beta \{V_p(DUTY) - \alpha \cdot (dr/dt)\}_2 dt \quad . \quad . \quad . \quad . \quad (4)$$

where
$\beta$ : a constant.
$V_p$: magnitude of pulse voltage applied to the electric motor 30.
DUTY: duty ratio of pulse voltage applied to the electric motor 30.
$\alpha$ : a constant, or a factor expressed with the following equation (3a) or (3b):

$$\alpha = [d\{f(1)\}/dl]^{-1} \quad . \quad . \quad . \quad . \quad . \quad (3a)$$

$$\alpha = [d\{g(r)\}/dr] \quad . \quad . \quad . \quad . \quad . \quad (3b)$$

where

f(1): a function of distance 1 representing the transmission ratio.

r: transmission ratio.

g(r): a function of transmission ratio r, or an inverse function of the above function f(1).

According to this embodiment, the heat value of the electric motor 30 is estimated as described below using equation (4) above. The rate of change in the transmission ratio of the transmission mechanism 20a is calculated from the distance 1 detected with the sheave position sensor 40.

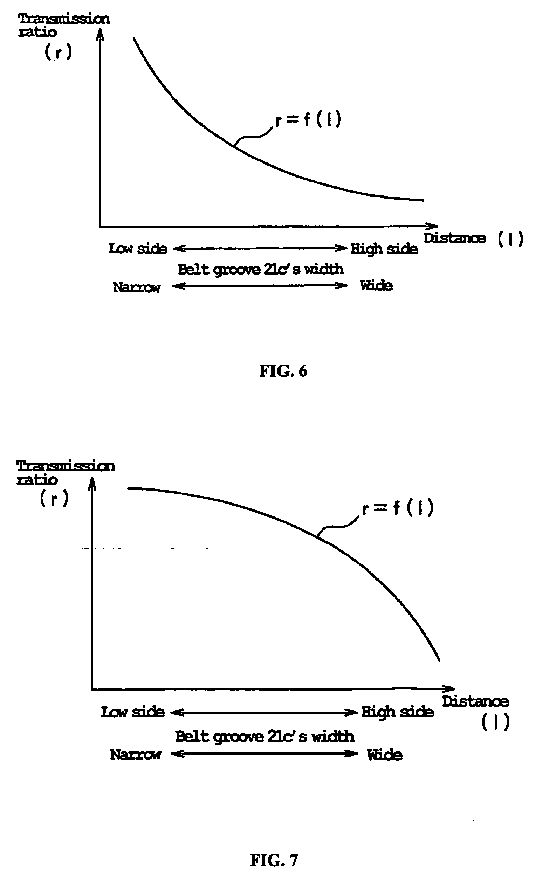

In equation (4) above, the function r = f(1) is determined according to the shapes of the belt groove 21c and the belt groove 22c. For example as shown in Fig. 6, the function r = f(1) may be a downward convex exponential function. In other words, the function r = f(1) may be set so that the change in the transmission ratio r relative to the change in the distance 1 becomes gentler as the distance 1 increases and the width of the belt groove 21c increases. In other words, the function r = f(1) may be set so that the change in the transmission ratio r relative to the change in the distance 1 becomes gentler as the transmission ratio changes toward the high side. In this case, the value α in equation (4) tends to be smaller as the distance 1 increases.

Alternatively, the function r = f(1) may be an upward convex exponential function as shown in Fig. 7 as an example. In other words, function r = f (1) may be set so that the change in the transmission ratio r relative to the change in the distance 1 becomes steeper as the distance 1 increases and the width of the belt groove 21c increases. In other words, the function r = f(1) may be set so that the change in the transmission ratio r relative to the change in the distance 1 becomes steeper as the transmission ratio changes toward the high side. In this case, the value α in equation (4) tends to be greater as the distance 1 increases.

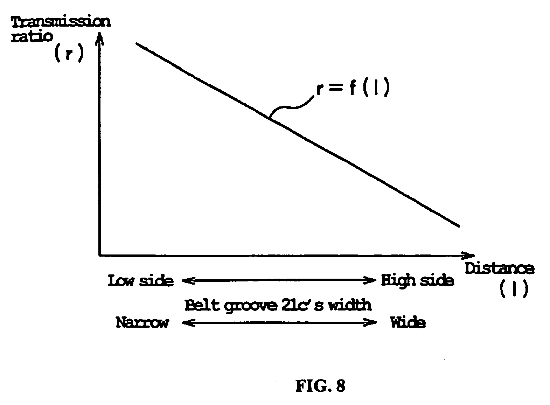

Further, the function r = f(1) may also be linear as shown in Fig. 8 as an example. In other words, the function r = f(1) may be set to be constant irrespective of the values of the distance 1 and the belt groove 21c. In other words, the function r = f(1) may be set to be constant irrespective of the transmission ratio. In this case, the value α in equation (4) remains constant irrespective of the distance 1. That is, α is a constant.

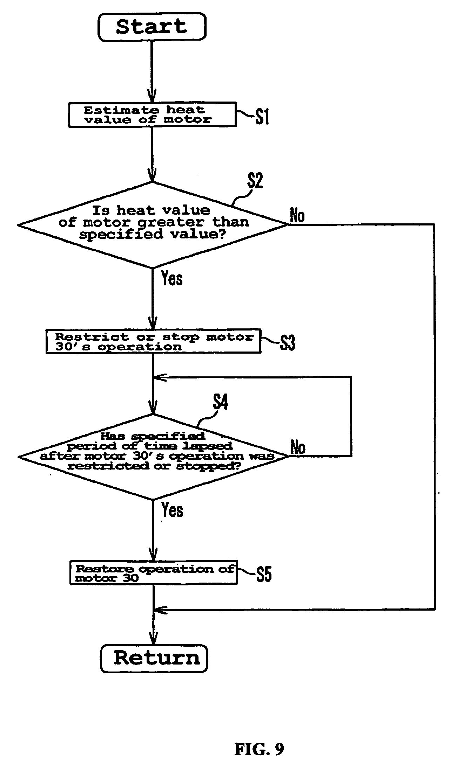

Fig. 9 is a flowchart representing the method of estimating the heat value of the electric motor 30 and method of controlling the electric motor 30. As shown in Fig. 9, the heat value of the electric motor 30 is estimated in step S1. Specifically, in step S1, the heat value of the electric motor 30 is estimated using equation (4) above.

Next, in step S2, a determination is made whether or not the estimated heat value of the electric motor 30 in step S1 is greater than a specified value. Because the heat value of the electric motor 30 is in correlation to the temperature of the electric motor 30, in general, the greater the heat value of the electric motor 30, the higher the temperature of the electric motor 30 accordingly. Therefore, it is possible to determine whether or not the temperature of the electric motor 30 is above the specified value, or alternatively, according to the determination in step S2 "whether or not the estimated heat value of the electric motor 30 is greater than a specified heat value." In other words, whether or not the temperature of the electric motor 30 is above the specified value is essentially determined in step S2.

Incidentally, the "specified heat value" in step S2 may be appropriately specified according to the characteristics of the electric motor 30 and the driving circuit 8. For example the "specified heat value" may be specified to be a value at which deterioration in performance is estimated to occur in the electric motor 30 and the driving circuit 8. In other words, the "specified heat value" may be specified to be a value above which the temperature of the electric motor 30 is estimated to exceed a permissible use temperature limit.

When the heat value of the electric motor 30 is determined to be greater than the specified heat value in step S2 as shown in Fig. 9, the process proceeds to step S3. In step S3, operation of the electric motor 30 is restricted or stopped.

After that, the process proceeds to step S4 to determine whether or not a specified period of time has lapsed after the operation of the electric motor 30 was restricted or stopped. In other words, it is determined in step S4 whether or not a specified period of time has lapsed after the restriction or stop of the operation of the electric motor 30 and whether or not the temperature of the electric motor 30 has lowered sufficiently. Here, the "specified period of time" may be specified for example to be a period of time taken for lowering the temperature of the electric motor 30 sufficiently. Therefore, the period of time taken for lowering the temperature of the electric motor 30 sufficiently is different according to the contents of the control made in step S3. For example, when the operation of the electric motor 30 is stopped, the temperature of the electric motor 30 lowers relatively quickly, so the "specified period of time" may be specified to be relatively short.

When it is determined in step S4 that the specified period of time has not lapsed after restricting or stopping the operation of the electric motor 30, the process returns to step S4. On the other hand, when it is determined in step S4 that the specified period of time has lapsed after the restriction or stop of the operation of the electric motor 30, the process proceeds to step S5, and the operation of the electric motor 30 is restored to the state before the restriction or stop made in step S3.

In contrast to the above, when it is determined in step S2 that the heat value of the electric motor 30 is less than the specified value, the process ends without performing steps S3 through S5.

Incidentally, the control of restricting or stopping the operation of the electric motor 30 in step S3 is not limited to a specific one as long as the control is performed so that the heat value of the electric motor 30 becomes smaller than that in normal operation of the electric motor 30. For example, the operation of the electric motor 30 may be stopped. In other words, changing the transmission ratio may be restricted. Further, for example, at least one of the upper limit of the revolution and the upper limit of the torque of the electric motor 30 may be lowered. In other words, the upper limit of the rate of change in the transmission ratio of the transmission mechanism 20a may be lowered. That is, in the case of a control in which the rate of change in the transmission ratio of the transmission mechanism 20a exceeds its upper limit, it may be made that the rate of change in the transmission ratio is restricted down to the upper limit speed. Further, for example, a permissible revolution range of the electric motor 30 may be narrowed. In other words, a permissible range of the transmission ratio of the transmission mechanism 20a may be narrowed. Further for example it is possible to make ineffective only the action that changes the transmission ratio suddenly like a kick-down action. Specifically, it may be adapted that the ECU 7 does not output pulse width modulation signals of great duty ratios (Refer to Fig. 5).

With this embodiment as described above, the heat value of the electric motor 30 is estimated from the rate of change in the transmission ratio of the transmission mechanism 20a. Thus, the heat value of the electric motor 30 is estimated using the rate of change in the transmission ratio obtained by differentiating with respect to time the transmission ratio detected with the sensor normally provided in the transmission mechanism 20a for measuring the transmission ratio. Specifically in this embodiment the heat value of the electric motor 30 is estimated using the rate of change in the transmission ratio calculated from the distance 1 detected with the sheave position sensor 40. Therefore, it is possible to estimate the heat value of the electric motor 30 with inexpensive, simple constitution without using additional sensors such as temperature sensors and current sensors.

When the heat value of the electric motor 30 exceeds the specified heat value and the temperature of the electric motor 30 is estimated to have risen beyond the permissible use temperature range of the electric motor 30, the operation of the electric motor 30 is restricted or stopped. This restricts the electric motor 30 from heating up above the permissible use temperature range. As a result, deterioration in performance and damage of the electric motor 30 and the driving circuit 8 are effectively restricted.

In particular with the method of restricting the operation of the electric motor 30 by lowering the upper limit of the rate of change in the transmission ratio of the transmission mechanism 20a, although the change in the transmission ratio becomes slow, is preferable because the transmission ratio is changed according to the vehicle speed and so the maneuver of the motorcycle 1 is less affected.

Also with this embodiment, when a specified period of time lapses after the restriction or the stop of operation of the electric motor 30, the operation of the electric motor 30 is restored to the state before the restriction or the stop. Therefore, when the specified period of time lapses after the restriction or the stop of operation of the electric motor 30, and the temperature of the electric motor 30 is estimated to have lowered within the permissible use temperature range, the operation of the electric motor 30 becomes normal. In this way, it is possible to restrict or stop the operation of the electric motor 30 only when required, otherwise operate the electric motor 30 swiftly, and change the transmission ratio at relatively high speeds. As a result, high quality of driveability is realized.

The transmission mechanism 20a is not limited to the belt type of ECVT. For example, the transmission mechanism 20a may be toroidal type of ECVT. Further, the transmission mechanism 20a may be other than the CVT. That is, there is no restriction to the type of transmission mechanism 20a as long as it is electronically controlled. However, because reverse drive of the electric motor 30 occurs frequently in the ECVT, this invention is especially effective for the ECVT.

In the case the motorcycle 1 uses the electric motor 30 controlled by PWM and the transmission mechanism 20a is the belt type of ECVT like in the embodiment above, the heat value of the electric motor 30 may be estimated using equation (4) above. In the case, for example, the electric motor 30 is not controlled by PWM or the transmission mechanism 20a is not the belt type of ECVT, the heat value of the electric motor 30 can be estimated using a more common equation, equation (1). In that case, as a matter of course, equation (1) may be transformed according to the transmission mechanism 20a. In other words, equation (1) can be applied commonly to any transmission mechanism 20a as long as it is electronically controlled to change the transmission ratio using an electric motor. Using equation (1) makes it possible to estimate the heat value of the electric motor 30 irrespective of the type of the transmission mechanism 20a that is electronically controlled. Therefore, this embodiment places no restriction on the type of transmission mechanism 20a as long as the transmission mechanism is electronically controlled using an electric motor.

The vehicle of this invention may be other than the scooter type of motorcycle. The vehicle of the invention may be an off-road type, motorcycle type, scooter type, or a so-called moped type. Further, the vehicle of the invention may be a straddle type of vehicle other than the motorcycle. Specifically, the vehicle of the invention may be, for example, an ATV (all-terrain vehicle). Furthermore, the vehicle of the invention may be other than the straddle type of vehicle such as a four-wheeled vehicle.

While the above embodiment is described as a preferable example using the motorcycle 1 provided with the internal combustion engine 10, the vehicle of the invention may be any vehicle provided with a driving source other than the engine. For example, the vehicle of the invention may be provided with an electric motor in place of, or in combination with, the engine 10.

The electric motor 30 is not limited to one controlled by PWM. For example, the electric motor 30 may be one controlled by pulse amplitude modulation (PAM). The motor 30 may be a stepper motor.

The term "specified heat value" in step S2 may be appropriately specified according to the characteristics of the electric motor 30 and the driving circuit 8. For example, the "specified heat value" may be specified to a value above which deterioration in performance of the electric motor 30 and the driving circuit 8 is estimated to occur. In other words, the "specified heat value" may be specified to a value above which it is estimated that the temperature of the electric motor 30 exceeds a permissible use temperature range of the electric motor 30.

The "specified period of time" in step S4 may be appropriately specified according to the details of the control performed in step S3 for restricting or stopping the operation of the electric motor 30. For example, the "specified period of time" in step S4 may be specified to a period of time after the restriction or stop of operation of the electric motor 30 in which the temperature of the electric motor 30 can be determined to have lowered well into the permissible use temperature range of the electric motor 30.

The phrase "the distance between the movable sheave half 22b and the stationary sheave half 22a" is the distance between a specific point on the movable sheave half 22b and a specific point on the stationary sheave half 22a. Those specific points may be arbitrarily set as long as each of them is determined with a single meaning. For example as shown in Fig. 3, "the distance between the movable sheave half 22b and the stationary sheave half 22a" may be defined to be the distance between the outermost radial end of the movable sheave half 22b and the outermost radial end of the stationary sheave half 22a.

The term "the magnitude of the pulse voltage" means the magnitude of the input pulse voltage.

The term "effective voltage" means the voltage obtained by multiplying the input pulse voltage by duty ratio.

This invention is effective in vehicles provided with an ECVT.

Description of Reference Numerals and Symbols

1: motorcycle
2: engine unit
7: ECU
8: driving circuit
10: engine
11: crankshaft
20: transmission
20a: transmission mechanism
21: primary sheave
21a: stationary sheave half
21b: movable sheave half
21c: belt groove
22: secondary sheave
22a: stationary sheave half
22b: movable sheave half
22c: belt groove
23: V belt
27: driven shaft
28: speed reduction mechanism
29: wheel shaft
30: electric motor
40: sheave position sensor
41: secondary sheave revolution sensor

42:     vehicle speed sensor
43:     primary sheave revolution sensor

**Claims**

1.  A control apparatus for a transmission mechanism (20a), the transmission mechanism comprising:

    an input shaft (11),
    an output shaft (27), and
    an electric motor (30) for changing a transmission ratio between the input shaft (11) and output shaft (27), **characterized in that** the control apparatus is adapted to estimate a heat value of the electric motor (30) from a rate of change in the transmission ratio.

2.  The control apparatus of Claim 1, wherein operation of the electric motor (30) is restricted or stopped when the estimated heat value of the electric motor (30) reaches or exceeds a specified value.

3.  The control apparatus of Claim 2, wherein the operation of the electric motor (30) is restricted by lowering an upper limit of rate of change in the transmission ratio when the estimated heat value of the electric motor (30) reaches or exceeds a specified value.

4.  The control apparatus of Claim 2 or 3, wherein the operation of the electric motor (30) is restricted by narrowing a permissible range of the transmission ratio when the estimated heat value of the electric motor (30) reaches or exceeds a specified value.

5.  The control apparatus of Claim 2, 3 or 4, wherein the operation of the electric motor (30) is resumed after a lapse of a specified time from the restriction or stop of the electric motor (30) operation.

6.  The control apparatus of any preceding Claim, wherein the heat value of the electric motor (30) is estimated using the following equation (1):

$$\int \beta \{V_A - \alpha \cdot (dr/dt)\}^2 \cdot dt \quad . \quad . \quad . \quad . \quad . \quad (1)$$

    where

    $\beta$: a constant
    $V_A$: effective voltage applied to the electric motor dr/dt: rate of change in the transmission ratio
    $\alpha$: a constant that is expressed with the following equation (3b):

$$\alpha = [d\{g(r)\}/dr] \quad . \quad . \quad . \quad . \quad . \quad (3b)$$

    where

    g(r): a function of transmission ratio r.

7.  The control apparatus of Claim 6, further comprising a driving circuit (8) for applying an impulse voltage to the electric motor (30) and meeting the following equation (2):

$$V_A = V_p \cdot (DUTY) \quad . \quad . \quad . \quad . \quad . \quad (2)$$

    where

$V_p$: magnitude of the impulse voltage DUTY: duty ratio of the impulse voltage.

8. The control apparatus of any preceding Claim, wherein the transmission mechanism (20a) comprises:

a primary sheave (21) provided on the input shaft (11),
a secondary sheave (22) provided on the output shaft (27), and
a V belt (23) routed around the primary and secondary sheaves (21, 22),
wherein the primary sheave (21) comprises:

a stationary sheave half (21a), and
a movable sheave half (21b), opposing the stationary sheave half (21a), displaceable in the input shaft axis direction, and constituting together with the stationary sheave half (21a) a V groove (21c) through which the V belt (23) is routed,

wherein the electric motor (30) is adapted to change the transmission ratio by displacing the movable sheave half (21b) relative to the stationary sheave half (21a) so as to change a width of the V groove (21c), and the heat value of the electric motor (30) is estimated using the following equation (1):

$$\int \beta \{V_A - \alpha \cdot (dr/dt)\}^2 \cdot dt \quad . \quad . \quad . \quad . \quad (1)$$

where

$\beta$: a constant
$V_A$: effective voltage applied to the electric motor dr/dt: rate of change in the transmission ratio
$\alpha$: a constant that is expressed with the following equation 3 (a) or (3b):

$$\alpha = [d\{f(l)\}/dl]^{-1} \quad . \quad . \quad . \quad . \quad . \quad (3a)$$

$$\alpha = [d\{g(r)\}/dr] \quad . \quad . \quad . \quad . \quad . \quad (3b)$$

where

f(1): a function of 1 representing the transmission ratio
g(r): a function of transmission ratio, an inverse function of the function f(1).

9. The control apparatus of Claim 8,
where $\alpha$ increases with the increase in the distance 1.

10. The control apparatus of Claim 8,
where $\alpha$ decreases with the increase in the distance 1.

11. The control apparatus of Claim 8,
where $\alpha$ is constant irrespective of the distance 1.

12. A transmission (20) comprising:

a transmission mechanism (20a) comprising: an input shaft (11), an output shaft (27), and an electric motor (30) for changing a transmission ratio between the input shaft (11) and the output shaft (27) **characterized by** a control section for estimating a heat value of the electric motor (30) based on the rate of change in the transmission ratio.

13. A vehicle (1) comprising a transmission (20) according to Claim 12.

**14.** A control method for a transmission mechanism (20a), the transmission mechanism (20a) comprising:

an input shaft (11),
an output shaft (27), and
an electric motor (30) for changing a transmission ratio between the input shaft (11) and the output shaft (27),
the control method **characterized by** comprising: estimating a heat value of the electric motor (30) based on a rate of change in the transmission ratio.

**Patentansprüche**

**1.** Steuerungsvorrichtung für einen Kraftübertragungsmechanismus (20a), wobei der Kraftübertragungsmechanismus Folgendes umfasst:

eine Antriebswelle (11),
eine Abtriebswelle (27) und
einen Elektromotor (30), um ein Übersetzungsverhältnis zwischen der Antriebswelle (11) und der Abtriebswelle (27) zu verändern,
**dadurch gekennzeichnet, dass** die Steuerungsvorrichtung dafür eingerichtet ist, aus einer Veränderungsgeschwindigkeit bei dem Übersetzungsverhältnis einen Wärmewert des Elektromotors (30) zu veranschlagen.

**2.** Steuerungsvorrichtung nach Anspruch 1, wobei der Betrieb des Elektromotors (30) eingeschränkt oder angehalten wird, wenn der veranschlagte Wärmewert des Elektromotors (30) einen spezifizierten Wert erreicht oder überschreitet.

**3.** Steuerungsvorrichtung nach Anspruch 2, wobei der Betrieb des Elektromotors (30) durch das Absenken einer oberen Grenze einer Veränderungsgeschwindigkeit bei dem Übersetzungsverhältnis eingeschränkt wird, wenn der veranschlagte Wärmewert des Elektromotors (30) einen spezifizierten Wert erreicht oder überschreitet.

**4.** Steuerungsvorrichtung nach Anspruch 2 oder 3, wobei der Betrieb des Elektromotors (30) durch das Verengen eines zulässigen Bereichs des Übersetzungsverhältnisses eingeschränkt wird, wenn der veranschlagte Wärmewert des Elektromotors (30) einen spezifizierten Wert erreicht oder überschreitet

**5.** Steuerungsvorrichtung nach Anspruch 2, 3 oder 4, wobei der Betrieb des Elektromotors (30) nach einem Ablauf einer spezifizierten Zeit seit dem Einschränken oder Anhalten des Betriebes des Elektromotors (30) wieder aufgenommen wird.

**6.** Steuerungsvorrichtung nach einem der vorhergehenden Ansprüche, wobei der Wärmewert des Elektromotors (30) veranschlagt wird unter Verwendung der folgenden Gleichung (1):

$$\int \beta \{V_A - \alpha \cdot (dr/dt)\}^2 \cdot dt \qquad (1),$$

wobei

$\beta$: eine Konstante,
$V_A$: wirksame an den Elektromotor angelegte Spannung,
$dr/dt$: Veränderungsgeschwindigkeit bei dem Übersetzungsverhältnis,
$\alpha$: eine Konstante, die ausgedrückt wird mit der folgenden Gleichung (3b):

$$\alpha = [d\{g(r)\}/dr] \qquad (3b),$$

wobei

$g(r)$: eine Funktion des Übersetzungsverhältnisses.

7. Steuerungsvorrichtung nach Anspruch 6, der ferner ein einen Treiberkreis (8) umfasst, um eine Impulsspannung an den Elektromotor (30) anzulegen, welche die folgende Gleichung (2) verfüllt:

$$V_A = V_p \cdot (DUTY) \qquad (2),$$

wobei:

$V_p$: Größe der Impulsspannung,
DUTY: relative Einschaltdauer der Impulsspannung.

8. Steuerungsvorrichtung nach einem der vorhergehenden Ansprüche, wobei der Kraftübertragungsmechanismus (20a) Folgendes umfasst:

eine primäre Scheibe (21), die an der Antriebswelle (11) bereitgestellt wird,
eine sekundäre Scheibe (22), die an der Abtriebswelle (27) bereitgestellt wird, und
einen Keilriemen (23), der um die primäre und sekundäre Scheibe (21, 22) geführt wird,
wobei die primäre Scheibe (21) Folgendes umfasst:

eine feststehende Scheibenhälfte (21 a) und,
eine bewegliche Scheibenhälfte (21b), die der feststehenden Scheibenhälfte (21a) gegenüberliegt, verschiebbar in der Richtung der Antriebswelle, und die zusammen mit der feststehenden Scheibenhälfte (21a) eine Keilrille (21c) darstellt, durch die der Keilriemen (23) geführt wird,

wobei der Elektromotor (30) dafür eingerichtet ist, das Übersetzungsverhältnis zu verändern durch das Verschieben der beweglichen Scheibenhälfte (21b) im Verhältnis zu der feststehenden Scheibenhälfte (21a), um so eine Breite der Keilrille (21c) zu verändern, und
wobei der Wärmewert des Elektromotors (30) veranschlagt wird unter Verwendung der folgenden Gleichung (1):

$$\int \beta \{V_A - \alpha \cdot (dr/dt)\}^2 \cdot dt \qquad (1),$$

wobei

$\beta$: eine Konstante,
$V_A$: wirksame an den Elektromotor angelegte Spannung,
dr/dt: Veränderungsgeschwindigkeit bei dem Übersetzungsverhältnis,
$\alpha$: eine Konstante, die ausgedrückt wird mit der folgenden Gleichung (3a) oder (3b):

$$\alpha = \left[d\{f(l)\}/dl\right]^{-1} \qquad (3a),$$

$$\alpha = \left[d\{g(r)\}/dr\right] \qquad (3b),$$

wobei

f(1): eine Funktion von 1, die das Übersetzungsverhältnis darstellt,
g(r): eine Funktion des Übersetzungsverhältnisses, eine Umkehrfunktion der Funktion f(1).

9. Steuerungsvorrichtung nach Anspruch 8, wobei $\alpha$ mit der Zunahme bei der Entfernung 1 zunimmt.

10. Steuerungsvorrichtung nach Anspruch 8, wobei $\alpha$ mit der Zunahme bei der Entfernung 1 abnimmt.

**11.** Steuerungsvorrichtung nach Anspruch 8, wobei $\alpha$ ungeachtet der Zunahme bei der Entfernung 1 konstant ist.

**12.** Getriebe (20), das Folgendes umfasst:

einen Kraftübertragungsmechanismus (20a), der Folgendes umfasst: eine Antriebswelle (11), eine Abtriebswelle (27) und einen Elektromotor (30), um ein Übersetzungsverhältnis zwischen der Antriebswelle (11) und der Abtriebswelle (27) zu verändern,
**gekennzeichnet durch** eine Steuerungssektion, um auf der Grundlage der Veränderungsgeschwindigkeit bei dem Übersetzungsverhältnis einen Wärmewert des Elektromotors (30) zu veranschlagen.

**13.** Fahrzeug (1), das ein Getriebe (20) nach Anspruch 12 umfasst.

**14.** Steuerungsverfahren für einen Kraftübertragungsmechanismus (20a), wobei der Kraftübertragungsmechanismus (20a) Folgendes umfasst:

eine Antriebswelle (11),
eine Abtriebswelle (27) und
einen Elektromotor (30), um ein Übersetzungsverhältnis zwischen der Antriebswelle (11) und der Abtriebswelle (27) zu verändern,
**dadurch gekennzeichnet, dass** die Steuerungsvorrichtung dafür eingerichtet ist, aus einer Veränderungsgeschwindigkeit bei dem Übersetzungsverhältnis einen Wärmewert des Elektromotors (30) zu veranschlagen.

**Revendications**

**1.** Dispositif de commande pour un mécanisme de transmission (20a), le mécanisme de transmission comprenant:

un arbre d'entrée (11),
un arbre de sortie (27) et
un moteur électrique (30) pour faire varier un rapport de transmission entre l'arbre d'entrée (11) et l'arbre de sortie (27),
**caractérisé par le fait que** le dispositif de commande est adapté pour estimer une valeur thermique du moteur électrique (30) à partir d'un taux de variation du rapport de transmission.

**2.** Dispositif de commande selon la revendication 1, dans lequel le fonctionnement du moteur électrique (30) est restreint ou stoppé lorsque la valeur thermique estimée du moteur électrique (30) atteint ou dépasse une valeur spécifiée.

**3.** Dispositif de commande selon la revendication 2, dans lequel le fonctionnement du moteur électrique (30) est restreint en abaissant une limite supérieure de taux de variation du rapport de transmission lorsque la valeur thermique estimée du moteur électrique (30) atteint ou dépasse une valeur spécifiée.

**4.** Dispositif de commande selon la revendication 2 ou 3, dans lequel le fonctionnement du moteur électrique (30) est restreint en réduisant la gamme admissible du rapport de transmission lorsque la valeur thermique estimée du moteur électrique (30) atteint ou dépasse une valeur spécifiée.

**5.** Dispositif de commande selon la revendication 2, 3 ou 4, dans lequel le fonctionnement du moteur électrique (30) reprend après un intervalle de temps spécifié à partir de la restriction ou de l'arrêt du fonctionnement du moteur électrique (30).

**6.** Dispositif de commande selon l'une quelconque des revendications précédentes, dans lequel la valeur thermique du moteur électrique (30) est estimée au moyen de l'équation (1) suivante:

$$\int \beta \left\{ V_A - \alpha \cdot \left( dr / dt \right) \right\}^2 \cdot dt \qquad (1),$$

où

β: une constante,
$V_A$: tension efficace appliquée au moteur électrique,
dr/dt: taux de variation du rapport de transmission,
α: une constante qui est exprimée au moyen de l'équation (3b) suivante:

$$\alpha = [d\{g(r)\}/dr] \qquad (3b),$$

où

g(r): une fonction du rapport de transmission r.

7.  Dispositif de commande selon la revendication 6, comprenant, en outre, un circuit d'attaque (8) pour appliquer une tension d'impulsion au moteur électrique (30), et satisfaisant à l'équation (2) suivante:

$$V_A = V_p \cdot (DUTY) \qquad (2),$$

où

$V_P$: grandeur de la tension d'impulsion,
DUTY: rapport cyclique de la tension d'impulsion.

8.  Dispositif de commande selon l'une quelconque des revendications précédentes, dans lequel le mécanisme de transmission (20a) comprend:

une poulie primaire (21) prévue sur l'arbre d'entrée (11),
une poulie secondaire (22) prévue sur l'arbre de sortie (27) et
une courroie trapézoïdale (23) qui passe autour des poulies primaire et secondaire (21,22),
dans lequel la poulie primaire (21) comprend:

une moitié de poulie fixe (21a) et
une moitié de poulie mobile (21 b), opposée à la moitié de poulie fixe (21 a), qui peut être déplacée dans la direction axiale de l'arbre d'entrée et qui forme avec la moitié de poulie fixe (21a) une gorge en V (21c) dans laquelle on fait passer la courroie trapézoïdale (23),

dans lequel le moteur électrique (30) est adapté pour faire varier le rapport de transmission en déplaçant la moitié de poulie mobile (21b) par rapport à la moitié de poulie fixe (21a) de manière à modifier une largeur de la gorge en V (21c) et
la valeur thermique du moteur électrique (30) est estimée au moyen de l'équation (1) suivante:

$$\int \beta \{V_A - \alpha \cdot (dr/dt)\}^2 \cdot dt \qquad (1),$$

où

β: une constante,
$V_A$: tension efficace appliquée au moteur électrique,
dr/dt: taux de variation du rapport de transmission,
α: une constante qui est exprimée au moyen de l'équation (3a) ou (3b) suivante:

$$\alpha = [d\{f(l)\}/dl]^{-1} \qquad (3a),$$

$$\alpha = \left[ d\{g(r)\} / dr \right] \qquad\qquad (3b),$$

où

f(1): une fonction de 1 représentant le rapport de transmission,
g(r): une fonction du rapport de transmission, fonction inverse de la fonction f(1).

**9.** Dispositif de commande selon la revendication 8, où $\alpha$ augmente à mesure que la distance 1 augmente.

**10.** Dispositif de commande selon la revendication 8, où $\alpha$ diminue à mesure que la distance 1 augmente.

**11.** Dispositif de commande selon la revendication 8, où $\alpha$ est constante quelle que soit la distance 1.

**12.** Transmission (20) comprenant:

un mécanisme de transmission (20a) comprenant: un arbre d'entrée (11), un arbre de sortie (27) et un moteur électrique (30) pour faire varier un rapport de transmission entre l'arbre d'entrée (11) et l'arbre de sortie (27),
**caractérisée par**
une section de commande pour estimer une valeur thermique du moteur électrique (30) sur la base du taux de variation du rapport de transmission.

**13.** Véhicule (1) comprenant une transmission (20) selon la revendication 12.

**14.** Procédé de commande pour un mécanisme de transmission (20a), le mécanisme de transmission (20a) comprenant:

un arbre d'entrée (11),
un arbre de sortie (27) et
un moteur électrique (30) pour faire varier un rapport de transmission entre l'arbre d'entrée (11) et l'arbre de sortie (27),
**caractérisé en ce que** le procédé de commande comprend l'estimation d'une valeur thermique du moteur électrique (30) sur la base d'un taux de variation du rapport de transmission.

FIG. 1

**FIG. 2**

**FIG. 3**

FIG. 4

| Throttle opening degree signal | | | | | | |
|---|---|---|---|---|---|---|

ECU  **7**

| Target transmission ratio | Target sheave position | Pulse width modulation signal |
|---|---|---|

Driving circuit  **8**

| Pulse voltage |
|---|

| Electric motor 30 |
|---|

| Vehicle speed signal |
|---|

FIG. 5

EP 1 953 427 B1

FIG. 6

FIG. 7

21

**FIG. 8**

Start

Estimate heat
value of motor — S1

S2

Is heat value
of motor greater than
specified value? — No

Yes

Restrict or stop motor
30's operation — S3

S4

Has specified
period of time lapsed
after motor 30's operation was
restricted or stopped? — No

Yes

Restore operation of
motor 30 — S5

Return

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004019740 A
- EP 1614939 A